# EUROPÄISCHE PATENTSCHRIFT

(11) **EP 3 717 319 B1**
(45) Veröffentlichungstag und Bekanntmachung des Hinweises auf die Patenterteilung: **11.01.2023**
(21) Anmeldenummer: 18815551.9
(22) Anmeldetag: 27.11.2018
(51) Int. Cl.: B60T 8/17, B60T 13/66, B60T 17/22

(54) **VERFAHREN ZUR BESTIMMUNG EINER BENÖTIGTEN ANPRESSGRÖSSE EINER BREMSE**
METHOD FOR EVALUATING THE NEEDED BRAKE FORCE OF A BRAKE CALIPER
MÉTHODE D'ÉVALUATION DE LA FORCE NÉCESSAIRE DE FREINAGE D'UN ÉTRIER DE FREIN

(30) Priorität: 01.12.2017 DE 102017011148
(43) Veröffentlichungstag der Anmeldung: 07.10.2020
(73) Patentinhaber: KNORR-BREMSE Systeme für Schienenfahrzeuge GmbH, 80809 München (DE)
(72) Erfinder: RASEL, Thomas, 85635 Höhenkirchen-Siegertsbrunn (DE)
(86) Internationale Anmeldenummer: PCT/EP2018/082730
(87) Internationale Veröffentlichungsnummer: WO 2019/105946

(56) Entgegenhaltungen:
- EP-A2- 0 276 435
- WO-A1-2014/067786
- DE-A1- 10 132 834
- DE-A1-102011 006 002

## Beschreibung

Die vorliegende Erfindung bezieht sich auf ein Verfahren zur Bestimmung einer benötigten Anpressgröße einer Bremse sowie auf eine Vorrichtung, ein System und ein Schienenfahrzeug zur Durchführung dieses Verfahrens.

Zur Verbesserung des Betriebs bzw. zur Verschleißreduzierung von Bremsen, insbesondere Reibbremsen, welche eine Bremswirkung durch Anpressen eines Reibbelags auf ein sich in Bewegung befindliches Gegenstück verursachen, ist es zielführend, die benötigte Anpresskraft abhängig vom Betriebszustand der Bremse einzustellen, so dass zum einen die gestellte Anpresskraft möglichst gering ausfällt, um Verschleiß in der Bremse zu reduzieren und zum anderen die gestellte Anpresskraft auf den Betriebszustand der Bremse eingestellt wird, um die Bremswirkung zu optimieren. Aus dieser Überlegung ergeben sich zudem Vorteile hinsichtlich Sicherheit und Wirtschaftlichkeit für den Betrieb von Fahrzeugen, insbesondere Schienenfahrzeugen, die solche Bremsen aufweisen.

Aus der WO 2014 / 067 786 A1 ist ein Verfahren bekannt, nach dem eine Verzögerungsgröße einer Reibbremse, also die Reibkraft oder das Reibmoment zwischen Reibbelag und Gegenstück, also Bremsbelag und Bremsscheibe, ermittelt wird. Zudem wird eine Anpressgröße des Bremsbelags auf die Bremsscheibe, also beispielsweise eine Anpresskraft oder ein Anpressdruck ermittelt. Diese werden anschließend zu einer Größe verrechnet, die den Betriebszustand der Bremse charakterisiert. In diesem Fall wird beispielsweise ein vorherrschender Reibwert zwischen Bremsbelag und Bremsscheibe berechnet.

DE 10 2011 006002 A1, EP 0 276 435 A2 und DE 101 32 834 A1 können ebenso als Stand der Technik zitiert werden.

Mit Hilfe dieses Reibwertes lässt sich nun aus einer gewünschten Verzögerungsgröße der Bremse eine dafür benötigte Anpressgröße ermitteln, wobei durch Einbeziehung des Reibwertes die aktuell in der Bremse vorherrschenden Betriebszustände berücksichtigt werden.

Nachteilig an diesem Verfahren ist, dass die Verzögerungsgrößen als momentane Messwerte starken Schwankungen unterliegen. Zudem wird nicht berücksichtigt, dass die Ermittlung der Verzögerungsgröße der Bremse von verschiedenen Betriebszuständen abhängt und sich aufgrund von Toleranzen und Abnutzung Unterschiede im Reibwert über eine Umdrehung der Bremsscheibe einstellen können, wodurch die Ermittlung fehlerbehaftet und weniger robust erfolgt.

Es ist Aufgabe der vorliegenden Erfindung, ausgehend vom Stand der Technik, ein Verfahren, eine Vorrichtung, ein System ein Schienenfahrzeug und ein Computerprogrammprodukt bereitzustellen, welche jeweils die oben genannten Probleme lösen und die Ermittlung einer benötigten Anpressgröße in robuster Weise ermöglichen.

Diese Aufgabe wird mittels der unabhängigen Ansprüche gelöst. Vorteilhafte Weiterbildungen sind Gegenstand der Unteransprüche.

Erfindungsgemäß ist ein Verfahren vorgesehen, das zur Bestimmung einer benötigten Anpressgröße mindestens einer Bremse, insbesondere einer Reibbremse, dient, wobei mindestens zwei aktuelle Werte einer Verzögerungsgröße der Bremse, vorzugsweise pro Umdrehung derselben, bestimmt werden, wobei die mindestens zwei aktuellen Werte der Verzögerungsgröße mittels eines variablen Filters zu einer mittleren Verzögerungsgröße der Bremse verarbeitet werden. Aus der mittleren Verzögerungsgröße und einer aktuellen Anpressgröße wird anschließend eine Zustandsgröße der Bremse ermittelt, wobei aus dieser Zustandsgröße anschließend mit einer benötigten Verzögerungsgröße der Bremse eine benötigte Anpressgröße der Bremse bestimmt wird.

Als Anpressgröße kann dabei vorzugsweise eine Zuspannkraft der Bremsbeläge, oder der angelegte Bremsdruck oder eine andere geeignete Größe angesehen werden, welche ein Maß für das Anpressen der Bremsbeläge auf die Bremsscheibe bei einer Bremsung darstellt.

Als Verzögerungsgröße kann dabei vorzugsweise die Reibkraft oder das Reibmoment zwischen der Bremsscheibe und den Bremsbelägen oder eine andere geeignete Größe angesehen werden, welche ein Maß für die Verzögerung der Bremse, insbesondere der Bremsscheibe, darstellt. Durch die direkte Proportionalität von Reibkraft bzw. Reibmoment auf die Verzögerung der Bremsscheibe, kann auch die Verzögerung der Bremsscheibe, also beispielsweise ihre Winkelbeschleunigung oder zeitliche Drehzahländerung, als Verzögerungsgröße angesehen werden.

Vorzugsweise werden die zwei aktuellen Werte der Verzögerungsgröße so bestimmt, dass sie im Westlichen den aktuellen Betrieb der Bremse beschreiben und nicht veraltet, d.h. nicht mehr als einige Zehntel Sekunden und insbesondere nicht mehr als eine halbe Sekunde zurückliegen. Vorzugsweise werden die zwei aktuellen Werte der Verzögerungsgröße in weniger als 0,1 Sekunden bestimmt.

Vorzugsweise werden die aktuellen Werte der Verzögerungsgröße zu unterschiedlichen Stellungen der Bremse, insbesondere der Bremsscheibe gegenüber den Bremsbelägen, vorzugsweise zu jeweils 180°-Drehungen bei zwei aktuellen Werten, besonders bevorzugt bei gleichmäßiger Verteilung über der Bremsscheibe bei mehr als zwei Werten, ermittelt, so dass die Werte der Verzögerungsgröße möglichst über den gesamten Bereich der Bremsscheibe ermittelt werden können.

Vorzugsweise erfolgt zur weiteren Verarbeitung der aktuellen Werte der Verzögerungsgröße der Bremse eine Verarbeitung dieser Werte mittels eines variablen Filters zu einer mittleren Verzögerungsgröße der Bremse.

Vorzugsweise stellt die mittlere Verzögerungsgröße dabei einen Mittelwert der aktuellen Werte der Verzögerungsgröße dar.

Vorzugsweise erfolgt die Verarbeitung in dem variablen Filter durch Hoch- oder Tiefpassfilterung oder in anderer geeigneter Weise, um bestimmte Frequenzen, welche beispielsweise durch Fertigungstoleranzen und/oder Verschleiß und/oder Verformung und/oder Erwärmung etc. der Bremsscheibe entstehen können, aus der weiteren Verarbeitung auszuschließen.

Vorzugsweise ist dieses variable Filter über Betriebszustände der Bremse hin variabel gestaltet, so dass eine Ermittlung der mittleren Verzögerungsgröße in Abhängigkeit der Betriebsbedingungen der Bremse erfolgen kann.

Als mittlere Verzögerungsgröße kann dabei vorzugsweise die mittlere Reibkraft oder das mittlere Reibmoment zwischen der Bremsscheibe und den Bremsbelägen oder eine andere geeignete mittlere Größe angesehen werden, welche ein Maß für die Verzögerung der Bremse, insbesondere der Bremsscheibe, darstellt. Durch die direkte Proportionalität von mittlere Reibkraft bzw. mittlerem Reibmoment auf die mittlere Verzögerung der Bremsscheibe, kann auch die mittlere Verzögerung der Bremsscheibe, also beispielsweise ihre mittlere Winkelbeschleunigung oder ihre mittlere zeitliche Drehzahländerung, als mittlere Verzögerungsgröße angesehen werden.

Vorzugsweise wird anschließend aus der mittleren Verzögerungsgröße und einer ebenfalls ermittelten oder abgerufenen aktuellen Anpressgröße eine Zustandsgröße der Bremse bestimmt.

Die Zustandsgröße ist dabei vorzugsweise so gestaltet, dass sie die Umsetzungsfähigkeit der Bremse, einer aktuellen Anpressgröße in eine mittlere Verzögerungsgröße beschreibt. Die Umsetzungsfähigkeit kann sich beispielsweise durch Verschleiß der Bremsbeläge, oder Überhitzung derselben oder der Bremsscheibe, oder durch Anhaften von Wasser oder Verschmutzungen, wie beispielsweise Öl, auf Bremsbelägen oder Bremsscheibe signifikant ändern, was durch diese Zustandsgröße erfasst wird.

Vorzugsweise wird aus einer benötigten Verzögerungsgröße der Bremse und der Zustandsgröße der Bremse eine dafür nötige Anpressgröße bestimmt, wodurch ein Anpressen bzw. Zuspannen der Bremsbeläge eindeutig bestimmt wird, um eine benötigte Verzögerungsgröße in Abhängigkeit der Betriebszustände der Bremse umzusetzen.

Dies hat den Vorteil, dass die Anpressgröße nicht nur gestellt, sondern unter Berücksichtigung der Betriebszustände der Bremse aufgeprägt wird.

Vorzugsweise erfolgt die Ermittlung der aktuellen Werte der Verzögerungsgröße der Bremse zu verschiedenen Zeitpunkten des Bremsvorgangs. So kann sichergestellt werden, dass eine Ermittlung der aktuellen Werte der Verzögerungsgröße der Bremse auch zu verschiedenen Stellungen, also Winkelstellungen, der Bremse, insbesondere der Bremsscheibe, erfolgt, auch wenn keine Ermittlung einer Stellung der Bremse bzw. der Bremsscheibe möglich ist. Da sich die Drehgeschwindigkeit der Bremsscheibe während einer Bremsung ändert, wird die Verzögerungsgröße der Bremse, bei beispielsweise Ermittlungszeitpunkten mit gleichen Zeitabständen, stets zu unterschiedlichen Stellungen der Bremsscheibe erfasst.

Vorzugsweise ist sichergestellt, dass die verschiedenen Zeitpunkte so gewählt sind, dass die Ermittlung der mindestens zwei Werte der Verzögerungsgröße innerhalb einer Umdrehung der Bremsscheibe erfolgt. Dies kann beispielsweise sichergestellt werden, indem eine maximal mögliche Drehgeschwindigkeit der Bremsscheibe ermittelt wird und daraus die nötigen Zeitabstände zur Ermittlung der Verzögerungsgröße abgeleitet werden, so dass sichergestellt ist, dass sich die Bremsscheibe bei maximaler Drehgeschwindigkeit zwischen zwei Zeitpunkten vorzugsweise um weniger als 360° und besonders bevorzugt maximal um 180° gedreht hat.

Das variable Filter wird abhängig von einer Drehzahl der Bremse, insbesondere der Bremsscheibe angepasst. Vorzugsweise handelt es sich dabei um ein regelungstechnisches Übertragungsglied, beispielsweise ein PT1-Glied, mit einer drehzahlabhängigen Eckfrequenz, wodurch ermöglicht wird, Schwingungen in den Werten der Verzögerungsgröße reduzieren oder besonders bevorzugt zu eliminieren.

In einer anderen vorteilhaften Ausführungsform besitzt das variable Filter mehrere, vorzugsweise zwei, drehzahlabhängige Grenzfrequenzen, um beispielsweise ein bestimmtes Frequenzband für die weitere Analyse zu definieren und gegen zu tiefe bzw. zu hohe Frequenzen abzugrenzen. Somit wird ermöglicht, nicht nur hochfrequente Schwingungen aus der weiteren Verarbeitung der aktuellen Werte der Verzögerungsgröße herauszuhalten, sondern es können zudem auch niederfrequente Schwingungen, beispielsweise durch ein Anregung eines Verbrennungsmotors mit niedriger Drehzahl, herausgehalten werden.

In einer anderen vorteilhaften Ausführungsform bildet das variable Filter den Mittelwert aus den erfassten Werten der Verzögerungsgröße und bestimmt somit die mittlere Verzögerungsgröße der Bremse. Die Mittelung ist ebenfalls geeignet, um nicht erwünschte Schwingungen für die weitere Verarbeitung auszuschließen.

Vorzugsweise wird die mittlere Verzögerungsgröße der Bremse über ein ganzzahliges Vielfaches einer Umdrehung der Bremsscheibe bestimmt. Dabei kann es sich um eine, zwei oder mehrere Umdrehungen handeln. Der Vorteil dabei ist, dass somit die Toleranzen und Ungenauigkeiten welche in der Bremse vorliegen, über eine Umdrehung eliminiert werden. Werden beispielsweise die Werte der Verzögerungsgröße lediglich über eine Drehung der Bremsscheibe um lediglich 90° ermittelt, könnte sich die mittlere Verzögerungsgröße der Bremse bei gleicher Anpresskraft auf den verbleibenden 270° deutlich von den ermittelten Werten unterscheiden. Eine Ermittlung der Werte über eine volle Umdrehung, bzw. mehrere volle Umdrehungen, ermöglicht es, dieses Problem zu eliminieren.

Vorzugsweise handelt es sich bei der Zustandsgröße um einen Wert, welcher sich als Quotient aus der mittleren Verzögerungsgröße der Bremse und der aktuellen Anpressgröße wie folgt ermitteln lässt:
mittlere Verzögerungsgröße / aktuelle Anpressgröße; oder
aktuelle Anpressgröße / mittlere Verzögerungsgröße

Es ist dabei unerheblich, welche der beiden Berechnungsvorschriften verwendet wird. Beide beschreiben das Verhältnis der mittleren Verzögerungsgröße zur aktuellen Anpressgröße, geben also eine Information zurück, inwiefern die Bremse aus einer aktuellen Anpressgröße eine mittlere Verzögerungsgröße umsetzen kann.

Vorzugsweise handelt es sich bei der Zustandsgröße um einen dimensionslosen Reibwert, wobei eine mittlere Reibkraft als die mittlere Verzögerungsgröße und eine aktuelle Anpresskraft als die aktuelle Anpressgröße verwendet wird.

Vorzugsweise sind andere Ausgestaltungen dieses Quotienten denkbar, beispielsweise durch Verwendung des mittleren Reibmoments, oder der mittleren Verzögerung der Bremsscheibe als mittlere Verzögerungsgröße und des aktuellen Bremsdrucks als aktuelle Anpressgröße. Die somit entstehende Zustandsgröße ist dabei in der Regel nicht mehr dimensionslos, was jedoch unerheblich ist, sollte das weitere Verfahren zur Verarbeitung dieser Zustandsgröße ausgebildet sein.

Vorzugsweise wird die aktuelle Anpressgröße mittels eines Sensors bestimmt und/oder aus mehreren Werten dieses Sensors gemittelt und/oder aus der Verarbeitung mindestens eines Sensorwerts mit mehreren Parametern, welche die geometrischen und/oder physikalischen Randbedingungen der Bremse abbilden, bestimmt.

Vorzugsweise ermittelt der Sensor einen aktuellen Bremsdruck der Bremse, oder eine aktuelle Anpresskraft, vorzugsweise der Bremsbeläge auf die Bremsscheibe. Dies erfolgt vorzugsweise bei der Ermittlung eines Bremsdrucks mittels eines Drucksensors, welcher beispielsweise an der Bremse, bzw. in einer Leitung, welche den Bremsdruck zu der Bremse überträgt, vorgesehen ist. Eine aktuelle Anpresskraft kann beispielsweise durch eine Kraftmessdose oder andere geeignete Vorrichtungen zur Kraftmessung ermittelt werden.

Vorzugsweise wird die aktuelle Anpressgröße aus einer Mittelung, bzw. Filterung der Sensorwerte ermittelt, vergleichbar mit der Ermittlung der mittleren Verzögerungsgröße der Bremse, um Messstreuungen, Schwingungen und dergleichen vor der weiteren Verarbeitung zu eliminieren.

Vorzugsweise werden die Werte des Sensors zur weiteren Verarbeitung mit Parametern, welche die geometrischen und/oder physikalischen Randbedingungen der Bremse abbilden, verarbeitet. So können beispielsweise, falls eine direkte Ermittlung der Anpresskraft nicht möglich ist, der Bremsdruck oder alternativ andere ermittelte Kräfte, welche in geometrischer Beziehung zu der Anpresskraft stehen, durch Verarbeitung der Parameter der Bremse in eine Anpresskraft umgerechnet werden. Beispielsweise kann der Bremsdruck durch Berücksichtigung der Fläche, auf die er wirkt, in eine Anpresskraft umgerechnet werden. Zudem werden bevorzugt weitere physikalische Randbedingungen durch die Parameter berücksichtigt, so z.B. Vorspannkräfte einer Rückstellfeder, die zum Anlegen der Bremsbeläge an die Bremsscheibe überwunden werden müssen, oder "Losbrechkräfte", die überwunden werden müssen, um die Bremsbeläge aufgrund von Anhaften aus ihrer Ausgangsstellung im gelösten Zustand zu bewegen.

Vorzugsweise wird die benötigte Verzögerungsgröße der Bremse aus einer gewünschten Verzögerungsgröße eines Fahrzeugs, in dem die Bremse verbaut ist, ermittelt. Das Fahrzeug weist dabei vorzugsweise mindestens eine derartige Bremse auf.

Vorzugsweise wird die benötigte Verzögerungsgröße der Bremse dabei aus einer gewünschten Verzögerung, oder einer gewünschten Bremskraft des gesamten Fahrzeugs ermittelt. Vorteilhafterweise wird daraus eine Verzögerungsgröße für alle Bremsen und besonders bevorzugt eine Verzögerungsgröße individuell für jede Bremse ermittelt, wobei zudem geometrische Parameter der einzelnen Bremsen bzw. des Fahrzeugs in die Ermittlung einbezogen werden.

In einer weiteren vorteilhaften Ausführungsform der Erfindung wird zudem aus der mittleren Verzögerungsgröße der Bremse und der dazu benötigten Verzögerungsgröße eine zusätzliche Anpressgröße bestimmt, um die die benötigte Anpressgröße korrigiert wird.

Vorzugsweise wird dadurch erreicht, dass die benötigte Anpressgröße derart korrigiert wird, dass eine Einstellung einer tatsächlichen Anpressgröße sichergestellt ist, auch wenn sich Fehler bzw. Abweichungen in der Bestimmung der benötigten Anpressgröße einstellen. Somit ist sichergestellt, dass Abweichungen, beispielsweise in der Beschreibung der geometrischen Verhältnisse der Bremse, die Ermittlung der benötigten Anpressgröße nicht negativ beeinflussen.

Vorzugsweise findet die Ermittlung dieser zusätzlichen Anpressgröße mittels eines Reglers statt. Besonders bevorzugt dient einem solchen Regler die Differenz aus mittlerer Verzögerungsgröße und benötigter Verzögerungsgröße als Eingangsgröße zur weiteren Verarbeitung.

Vorzugsweise ist der Regler selbst als Integral-Regler (I-Regler), Proportional-Integral (PI-Regler), oder besonders bevorzugt als Proportional-Integral-Differenzial-Regler (PID-Regler) ausgebildet. Ein derartiger Regler hat den Vorteil, dass er einfach zu applizieren ist, da für derartige Regler, welche sich in der einschlägigen Literatur finden lassen, diverse Applikations- bzw. Einstellverfahren vorhanden sind. Zudem haben diese Regler den Vorteil, dass sie in der Lage sind, eine mögliche Regelabweichung, also die Differenz aus mittlerer Verzögerungsgröße und benötigter Verzögerungsgröße, auf Null zu reduzieren.

Darüber hinaus sind in weiteren Ausführungsformen weitere Regelverfahren in Gestalt anderer Regler, beispielsweise Zustandsregler, nichtlineare Regler oder schaltende Regler denkbar, welche dazu ausgebildet sind, die Regelabweichung auf Null zu reduzieren.

In einer weiteren vorteilhaften Ausführungsform der Erfindung wird die benötigte Anpressgröße der mindestens einen Bremse mit der aktuellen Anpressgröße zu einer Regelabweichung der Anpressgröße verarbeitet.

Da die aktuelle Anpressgröße zur Ermittlung der Zustandsbedingungen der Bremse in dem Verfahren verarbeitet wird, bietet es sich an, eine derartige Regelabweichung, vorzugsweise durch Differenzbildung, oder in anderer geeigneter Weise, durchzuführen. Die so ermittelte Regelabweichung kann beispielsweise einem Bremsdruckregler zur Verfügung gestellt werden, welcher die Regelung des aktuellen Bremsdruckes durchführt.

In einer weiteren Ausführungsform der Erfindung ist die Bremse speziell in einem Schienenfahrzeug vorgesehen. Schienenfahrzeuge sind üblicherweise mit einer Vielzahl derartiger Reibbremsen ausgestattet, wobei sich eine Anwendung des oben beschriebenen Verfahrens auf diese Bremsen vorteilhaft auswirkt.

Einerseits wird die Einstellung der Fahrzeugverzögerung optimiert, sodass Bremswegverlängerungen aufgrund zu geringer Anpresskräfte in der Bremse, welche beispielsweise unter regulären Bedingungen angemessen gewesen wären, aber bei einer feuchten Bremsscheibe zu gering sind, vermieden werden. Andererseits wird auch der Verschleiß der Bremsen verringert, welcher beispielsweise aufgrund zu hoher Anpresskräfte in der Bremse entstehen würde.

Ein derartiges Verfahren hat demnach den Vorteil, zum einen die Sicherheit des Betriebs eines solchen Schienenfahrzeugs zu erhöhen und zum anderen den Verschleiß der Bremsen eines solchen Schienenfahrzeugs zu reduzieren, was sich vor allem unter wirtschaftlichen Gesichtspunkten vorteilhaft für den Betrieb solche Schienenfahrzeuge darstellt.

In einer weiteren vorteilhaften Ausführungsform der Erfindung ist eine Vorrichtung zur Durchführung dieses Verfahrens vorgesehen wobei diese Vorrichtung zum Verbau in einem Fahrzeug ausgebildet ist. Vorzugweise weist diese Vorrichtung mindestens eine Verarbeitungseinheit zur Durchführung der Verfahrensschritte auf und verfügt zudem über mindestens eine Schnittstelle, die dazu ausgebildet ist, mindestens eine Verzögerungsgröße der mindestens einen Bremse zu erhalten und eine weitere Schnittstelle die dazu ausgebildet ist, eine aktuelle Anpressgröße der mindestens einen Bremse zu erhalten, sowie eine weitere Schnittstelle, die dazu ausgebildet ist, eine benötigte Anpressgröße zur weiteren Verarbeitung an das Fahrzeug zur Verfügung zu stellen.

Die Vorrichtung liegt dabei vorzugsweise in Form eines Steuergeräts vor, welches eine Verarbeitungseinheit enthält und die oben aufgeführten Schnittstellen aufweist. Vorzugsweise sind unter diesen Schnittstellen Anschlüsse für Sensoren bzw. Datenleitungen zu verstehen, über welche die benötigten Werte empfangen werden können.

In einer weiteren vorteilhaften Ausführungsform der Erfindung ist dieses Steuergerät ein schon im Fahrzeug vorhandenes Steuergerät, welches zur Durchführung dieses Verfahrens ausgebildet ist.

Vorzugsweise weist die Vorrichtung mindestens eine weitere Schnittstelle auf, welche dazu ausgebildet ist eine Drehzahl der mindestens einen Bremse erhalten. Dies erfolgt, wie oben beschrieben, dadurch, dass die Vorrichtung über diese Schnittstelle mit einem Drehzahlsensor in Verbindung steht, welcher Drehzahl der mindestens einen Bremse an die Vorrichtung zur Verfügung stellt. Alternativ ist eine Datenleitung vorgesehen, über welche die Drehzahl beispielsweise über einen Fahrzeug-BUS zur Verfügung gestellt werden kann.

In einer weiteren vorteilhaften Ausführungsform der Erfindung verfügt die Vorrichtung über eine weitere Schnittstelle, die dazu ausgebildet ist, eine benötigte Verzögerungsgröße des Fahrzeugs zu erhalten. Diese Schnittstelle kann vorzugsweise in Form einer Datenverbindung zu einem Fahrzeug-BUS vorliegen, worüber die Vorrichtung mit den entsprechenden Daten versorgt wird.

In einer weiteren vorteilhaften Ausführungsform der Erfindung ist ein System vorgesehen, welches zur Durchführung des zuvor beschriebenen Verfahrens ausgebildet ist, aufweisend, mindestens einen Sensor der dazu ausgebildet ist mindestens eine Verzögerungsgröße der mindestens einen Bremse zu bestimmen sowie eine zuvor beschriebene Vorrichtung, wobei der Sensor aktuelle Werte der Verzögerungsgröße über die entsprechende Schnittstelle an die Vorrichtung überträgt.

In einer weiteren vorteilhaften Ausführungsform der Erfindung ist ein System vorgesehen welches zusätzlich einen Sensor zur Ermittlung der Drehzahl der mindestens einen Bremse aufweist, wobei der Sensor aktuelle Werte der Drehzahl über die entsprechende Schnittstelle zur weiteren Verarbeitung an die Vorrichtung überträgt.

Beide Ausführungsformen der zuvor beschriebenen Systeme haben den Vorteil, dass sie sich als integrales Bauteil ausbilden lassen, und so platzsparend an einem Fahrzeug verbaut werden können, ohne dass konstruktiver Aufwand zwischen den benötigten Sensoren und der Vorrichtung nötig ist, wie beispielsweise die Verlegung von Datenleitungen.

In einer weiteren vorteilhaften Ausführungsform der Erfindung ist ein Fahrzeug, insbesondere ein Schienenfahrzeug, vorgesehen, welches zur Durchführung des oben genannten Verfahrens ausgebildet ist, wobei das Fahrzeug eine Vorrichtung, entsprechend der zuvor beschriebenen Vorrichtungen, oder ein System entsprechend der zuvor beschriebenen Systeme aufweist.

Das Fahrzeug wird durch die verbaute Vorrichtung, oder System zur Durchführung des Verfahrens befähigt, und ist in der Lage dadurch seine Reibbremsen optimal bzw. mit reduziertem Verschleiß zu betreiben.

In einer weiteren vorteilhaften Ausführungsform der Erfindung liegt die Erfindung in Form eines Computerprogrammprodukts vor, welches mit auf einem maschinenlesbaren Träger gespeichertem Programmcode zur Durchführung des zuvor beschriebenen Verfahrens ausgebildet ist.

Dies hat den Vorteil, dass der Programmcode einfach auf Steuervorrichtungen, wie Steuergeräte von Fahrzeugen, insbesondere Schienenfahrzeugen, übertragen werden kann, wodurch diese Steuervorrichtungen zur Durchführung des Verfahrens befähigt werden. Ein Nachrüsten, bzw. Erweitern der Funktionalitäten bestehender Fahrzeuge wird dadurch ermöglicht.

Im Folgenden erfolgt die Beschreibung der Erfindung anhand bevorzugter Ausführungsbeispiele unter Bezugnahme auf die beigefügten Zeichnungen.

Im Einzelnen zeigt:
- Fig. 1: eine grundsätzliche Struktur einzelner Verfahrensschritte.
- Fig. 2: eine Ausführungsform des erfindungsgemäßen Verfahrens.
- Fig. 3: eine Vorrichtung mit einer Verarbeitungsstruktur zur Durchführung des erfindungsgemäßen Verfahrens.

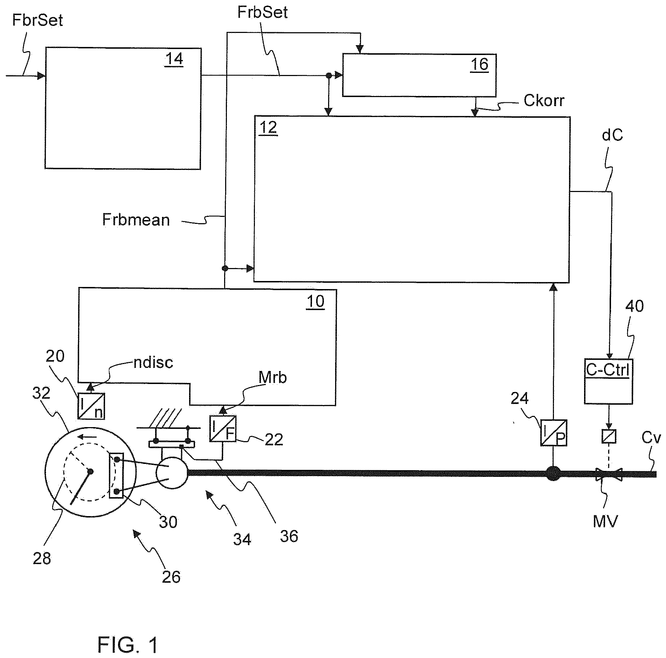

**Fig. 1-3** zeigen im unteren linken Abschnitt schematisch jeweils den typischen Aufbau einer Bremse 26, wie sie üblicherweise in Fahrzeugen, insbesondere Schienenfahrzeugen, vorgesehen ist.

Die Bremse 26 besteht dabei aus einer Bremsscheibe 28, die drehfest mit einem Rad 32 des Fahrzeugs verbunden ist. An der Bremsscheibe 28 angeordnet befinden sich die Bremsbacken 30 zu beiden Seiten der Bremsscheibe. Die Bremsbacken 30 enthalten die Bremsbeläge, wobei diese bei Zuspannen der Bremsbacken 30 an der Bremsscheibe 28 anliegen, bzw. an diese angepresst werden, wodurch ein Reibmoment entsteht, welches die Drehbewegung der Bremsscheibe 28 und damit des Rades 32 abbremst.

Die Bremsbacken 30 sind über eine Bremsbefestigung 34 relativ zu Bremse 26 und Rad 32 fixiert. Über eine Bremsleitung 38 kann ein Bremsdruck auf die Bremsbacken 30 aufgeprägt werden, um diese an die Bremsscheibe 28 anzulegen.

Der Bremsdruck C in der Bremsleitung 38 wird über einen nicht dargestellten Druckspeicher zur Verfügung gestellt. Dafür reguliert ein Bremsdruckregler 40 über ein Magnetventil MV den Bremsdruck C, indem er die Bremsleitung 38 mit Hilfe des Magnetventils MV mit dem Druck Cv des nicht dargestellten Druckspeichers beaufschlagt, bzw. die Beaufschlagung dadurch reguliert.

Weiterhin sind Sensoren 20, 22, 24 vorgesehen, welche für die Durchführung des Verfahrens benötigte Werte liefern.

Es ist eine Drehzahlerfassungsvorrichtung 20, insbesondere ein Drehzahlsensor, vorgesehen, der dazu ausgebildet ist, die aktuelle Drehzahl ndisc der Bremsscheibe 28, oder auch des Rades 32 zu erfassen.

Es ist weiterhin eine Verzögerungsgrößenerfassungsvorrichtung 22, insbesondere ein Kraftsensor oder Momentensensor vorgesehen, der dazu ausgebildet ist, die aktuelle Drehzahl Verzögerungsgröße, in diesem Falle ein Reibmoment Mrb der Bremsscheibe 28, zu erfassen. In der gezeigten Darstellung ist die Verzögerungsgrößenerfassungsvorrichtung 22 dazu mit einer Leitung 36 verbunden. Die Leitung 36 steht mit der Bremsbefestigung 34 in Kontakt, wodurch Kräfte in der Bremsbefestigung 34 über die Leitung 36 an die Verzögerungsgrößenerfassungsvorrichtung 22 übermittelt werden. So kann eine Verzögerungsgröße, insbesondere eine Reibkraft Frb, an der Bremsscheibe 28 erfasst werden, da sich diese in der Bremsbefestigung 34 abstützt, wodurch sie über die Leitung 36 durch die Verzögerungsgrößenerfassungsvorrichtung 22 erfasst wird.

Zudem ist eine Anpressgrößenerfassungsvorrichtung 24 vorgesehen, welche in dieser Darstellung als Drucksensor ausgebildet ist, welcher die Anpressgröße, in diesem Fall den Bremsdruck C erfasst.

**Fig. 1** zeigt eine grundsätzliche Struktur einzelner Verfahrensschritte.

Es ist ein Abschnitt 10 zur Ermittlung der mittleren Verzögerungsgröße in diesem Falle der mittleren Reibkraft Frbmean der Bremse 26 vorgesehen. Alternativ kann beispielsweise auch die Ermittlung des mittleren Reibmoments oder der mittleren Verzögerung der Bremse 26, insbesondere der Bremsscheibe 28, erfolgen.

In der gezeigten Darstellung besitzt der Abschnitt 10 zwei Eingänge, wobei über den einen Eingang mindestens zwei aktuelle Werte der Verzögerungsgröße der Bremsscheibe 28, in diesem Falle des Reibmoments Mrb, und über den anderen Eingang eine Drehzahl ndisc der Bremsscheibe zur Verfügung gestellt werden.

Abschnitt 10 verarbeitet nun die so erhaltenen Werte des Reibmoments Mrb der Bremsscheibe 28 in Abhängigkeit der Drehzahl ndisc der Bremsscheibe 28 zu einer mittleren Reibkraft Frbmean. Zur Verarbeitung kommen dabei Methoden aus der Datenverarbeitung, wie beispielsweise FFT-Analyse, Mittelwertbildung, Filterung, Plausibilisierung und dergleichen zum Einsatz. Diese Methoden sind dabei abhängig von der Drehzahl ndisc der Bremsscheibe 28 gestaltet, so dass die Ermittlung der mittleren Reibkraft Frbmean abhängig von der Drehzahl ndisc erfolgen kann und unerwünschtes Verhalten der Analyse bei verschiedenen Drehzahlen ndisc ausgeschlossen werden kann.

Weiterhin ist ein Abschnitt 14 gezeigt, welcher eine benötigte Verzögerungsgröße, in der Darstellung einen Sollwert FrbSet der Reibkraft Frb der Bremsscheibe 28, ermittelt. Dazu verarbeitet dieser einen Sollwert FbrSet einer Bremskraft, welche benötigt wird, um das Fahrzeug mit einer gewünschten Verzögerung abzubremsen. Der Sollwert FbrSet wird dabei von außen erhalten, beispielsweise über einen Fahrzeug-BUS oder ein anderes Steuergerät des Fahrzeugs.

Abschnitt 12 bestimmt nun aus der mittleren Reibkraft Frbmean, dem Sollwert FrbSet und dem durch den Sensor 24 bereitgestellten Wert des Bremsdrucks C, eine Regelabweichung dC, welche als Eingangswert für den Bremsdruckregler 40 verwendet wird.

Die Bestimmung des Wertes dC erfolgt dabei vor allem unter Einbeziehung des aktuellen Zustands der Bremse 26, bzw. deren Fähigkeit, aus einer Anpressgröße, in diesem Fall einem Bremsdruck C, eine mittlere Verzögerungsgröße, in diesem Fall eine mittlere Reibkraft Frbmean zu erzeugen.

Abschnitt 12 enthält somit eine adaptive Vorsteuerung zur Einstellung einer benötigten Anpressgröße der Bremse 26.

Abschnitt 12 verarbeitet darüber hinaus einen Korrekturwert Ckorr, welcher durch einen weiteren Abschnitt 16 zur Verfügung gestellt wird. Der Korrekturwert Ckorr dient dazu, verbleibende Regelabweichungen zwischen Soll- und Istwert der Verzögerungsgröße der Bremsscheibe 28, in diesem Fall zwischen dem Sollwert FrbSet und der mittleren Reibkraft Frbmean, zu eliminieren. In Abschnitt 12 wird dieser zur Korrektur des Sollwertes der Anpressgröße verwendet.

Abschnitt 16 verarbeitet zu diesem Zweck Soll- und Istwert der Verzögerungsgröße der Bremsscheibe 28, in diesem Fall zwischen dem Sollwert FrbSet und der mittleren Reibkraft Frbmean und ermittelt daraus den Korrekturwert Ckorr.

Abschnitt 16 kann somit auch als Regler bezüglich der benötigten Anpressgröße verstanden werden.

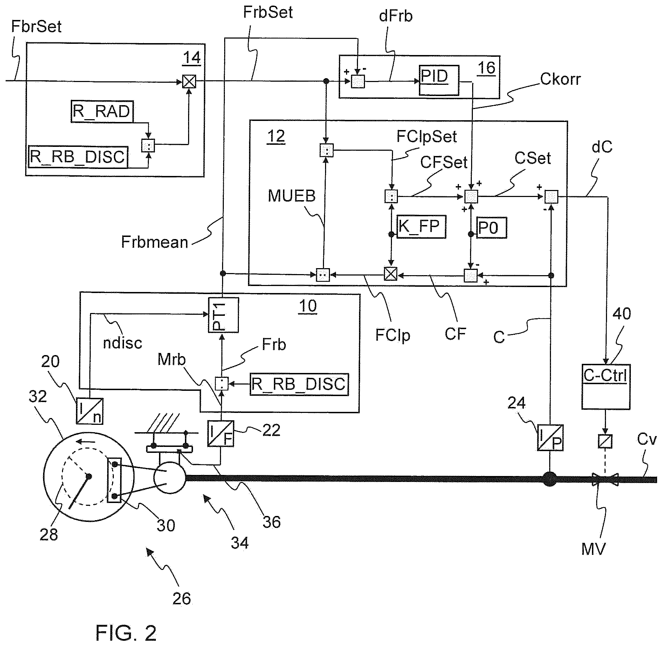

In **Fig. 2** ist grundsätzlich dieselbe Struktur des Verfahrens wie in Fig. 1 gezeigt. Es sind dieselben Abschnitte 10, 12, 14, 16 vorhanden, wobei nun ein Ausführungsbeispiel gezeigt ist, in welcher Weise die einzelnen Abschnitte 10, 12, 14, 16 die erhaltenen Werte verarbeiten.

Abschnitt 10 erhält wie zuvor ausgeführt das Reibmoment Mrb der Bremsscheibe 28 und die Drehzahl ndisc der Bremsscheibe 28. Aus dem Reibmoment Mrb wird durch Division mit dem Reibradius R_RB_DISC zwischen Bremsbacken 30 und Bremsscheibe 28 die Reibkraft Frb in diesem Kontakt berechnet.

Der Reibradius R_RB_DISC stellt dabei den effektiven Radius dar, an dem die Summe der Reibkräfte, welche über die gesamte Anlagefläche des Bremsbelags an der Bremsscheibe 28 wirken, effektiv wirken.

Die so ermittelte Reibkraft Frb wird anschließend durch ein variables Filter 21, hier ein PT1-Glied, verarbeitet, wobei zur Verarbeitung mindestens zwei Werte der Reibkraft Frb einbezogen werden.

Das variable Filter 21 empfängt zudem die Drehzahl ndisc der entsprechenden Bremsscheibe 28, wodurch es seine Empfindlichkeit, in diesem Fall die Eckfrequenz des PT1-Gliedes anpasst und somit auf Schwingungen in der Bremse oder unerwünschte Effekte reagieren kann.

Die Eckfrequenzen für verschiedene Drehzahlen ndisc ist dabei in der Rechenvorschrift des variablen Filters 21 enthalten.

Das variable Filter 21 verarbeitet dabei Werte der Drehzahl ndisc und der Reibkraft Frb über mindestens eine volle Scheibendrehung hinweg, wodurch Toleranzen und Abweichungen aufgrund von Verschleiß in der Bremse eliminiert werden.

Aus dem variablen Filter 21 bzw. Abschnitt 10 wird dann eine mittlere Reibkraft Frbmean der Bremsscheibe 28 erhalten, welche anschließend an weitere Abschnitte 12, 16 übergeben wird.

Abschnitt 14 verarbeitet einen Sollwert FbrSet einer Bremskraft, welche in diesem Fall zwischen Rad 32 und einer nicht dargestellten Lauffläche einer Schiene wirken soll und damit das Fahrzeug abbremsen soll.

Der Sollwert FbrSet wird zur weiteren Verarbeitung mittels des Radradius R_RAD und des Reibradius R_RB_DISC zwischen Bremsbelag und Bremsscheibe in einen Sollwert FrbSet der Reibkraft der Bremse 26 umgerechnet und an weitere Abschnitte 12, 16 übergeben.

Abschnitt 16 bildet in dieser Ausgestaltung eine Regelabweichung dFrb der mittleren Reibkraft Frbmean von ihrem Sollwert FrbSet. Diese Regelabweichung wird anschließend von einem Regler 42, in diesem Fall einem PID-Regler, verarbeitet um einen Korrekturwert Ckorr zu erhalten, welcher dazu gedacht ist, Abweichungen oder Fehler in dem Sollwert des Bremsdruckes CFSet zu korrigieren. Der Korrekturwert wird zur weiteren Verarbeitung an Abschnitt 12 übergeben.

In Abschnitt 12 ist exemplarisch die Berechnung einer Zustandsgröße, hier ein mittlerer Belagreibwert MUEB der Bremse 26 bzw. deren Umsetzungsfähigkeit einer Anpresskraft in eine Reibkraft, wie oben beschrieben, und die Ermittlung eines Sollwerts eines Bremsdrucks gezeigt.

Aus dem erhaltenen Bremsdruck C ermittelt Abschnitt 12 über Systemparameter P0 und K_FP eine aktuelle Anpressgröße, in diesem Fall eine Zuspannkraft FClp.

Der Parameter P0 stellt dabei einen Anlegedruck dar, welcher aufgebaut werden muss, um die Reibbeläge der Bremse 26 mit der Bremsscheibe 28 in Kontakt zu bringen. Dies liegt daran, dass in der Bremse eine Rückstellfeder verbaut ist, die die Reibbeläge von der Bremsscheibe 28 wegdrückt. Die Kraft der Rückstellfeder muss bei Bremsung durch einen Anlegedruck P0 überwunden werden. Der Bremsdruck CF entspricht also dem anliegenden Bremsdruck C, welcher um den Anlegedruck P0 korrigiert wurde.

Der Parameter K_FP bildet die geometrischen sowie sonstigen Gegebenheiten der Bremse 26 ab. Darunter sind vorzugsweise Hebel- und Übersetzungsverhältnisse, Anpressflächen und dergleichen zu verstehen. In dieser Ausführungsform ist er als Bremszangenkennlinie ausgeführt, also variabel gestaltet. Durch Multiplikation des Parameters K_FP mit dem Bremsdruck CF wird die Zuspannkraft FClp bestimmt.

Die Zuspannkraft FClp wird zusammen mit der mittleren Reibkraft Frbmean in einen mittleren Belagreibwert MUEB mittels Quotientenbildung verrechnet, entsprechend der oben beschriebenen Rechenvorschrift. Der mittlere Belagreibwert MUEB beschreibt hier die aktuelle Fähigkeit der Bremse 26, aus einer Anpresskraft FClp eine mittlere Reibkraft Frbmean zu bilden.

Aus Kenntnis des mittleren Belagreibwerts MUEB, also einer Systemeigenschaft der Bremse 26, berechnet Abschnitt 12 anschließend unter Einbeziehung des Sollwerts FrbSet der Reibkraft Frb einen Sollwert FClpSet für die Zuspannkraft FClp der Bremsbacken 30.

Dieser Sollwert FClpSet der Zuspannkraft FClp wird anschließend mit Hilfe des Parameters K_FP in einen Sollwert CFSet des Bremsdrucks umgerechnet. Dieser Sollwert CFSet entspricht im Wesentlichen einem Berechnungsergebnis einer Berechnungsstruktur, die einer adaptiven Vorsteuerung entspricht. Diese wird gebildet durch die Berechnung des Sollwerts CFSet aus dem Sollwert FrbSet. Die Vorsteuerung ist durch die aktuelle Berechnung des mittleren Belagreibwerts adaptiv gestaltet.

Eine Vorsteuerung, also ein Stellen eines Druckes, in diesem Fall eines Sollwertes CFSet eines Bremsdruckes hat den Vorteil, dass dies unmittelbar durch Eingabe eines Sollwertes, in diesem Fall eines Sollwerts FrbSet der Reibkraft, erfolgt. Allerdings setzt dies eine hinreichend genaue Kenntnis des vorgesteuerten Systems, beispielsweise durch mathematische Modellierung, oder durch Ablegen verschiedener Betriebsparameter in einem Kennfeld, voraus. In dem Fall der Bremse 26 kann sich der mittlere Reibwert MUEB in einem großen Bereich bewegen. Er kann durch Verschleiß oder Feuchte abnehmen und bei Abtrocknung wieder zunehmen, so dass er Schwankungen sowohl nach oben als auch nach unten unterworfen ist. Diese Systemeigenschaft ist relativ schwer durch eine Modellierung zu fassen, worin der Vorteil der Adaptivität durch Rückführung der mittleren Reibkraft Frbmean gegenüber einer modellgestützten Vorsteuerung zu sehen ist.

In einem weiteren Berechnungsschritt werden in Abschnitt 12 der Sollwert CFSet des Bremsdrucks aus der Vorsteuerung, der Korrekturwert Ckorr und der Anlegedruck P0 zu dem letztendlichen Sollwert CSet des Bremsdrucks zusammengeführt.

Zuletzt berechnet Abschnitt 12 aus diesem Sollwert CSet und dem tatsächlichen Bremsdruck C eine Regelabweichung dC des Bremsdrucks, um diese an den Bremsdruckregler 40 weiterzugeben, welcher auf Basis dieser Eingabe das Magnetventil MV zur Einstellung des Bremsdrucks C in der Bremsleitung 38 mit Hilfe des Drucks Cv aus einem Druckspeicher ansteuert. Die Bremse 26 setzt daraufhin, wie oben beschrieben, den Bremsdruck C in eine Reibkraft Frbmean um.

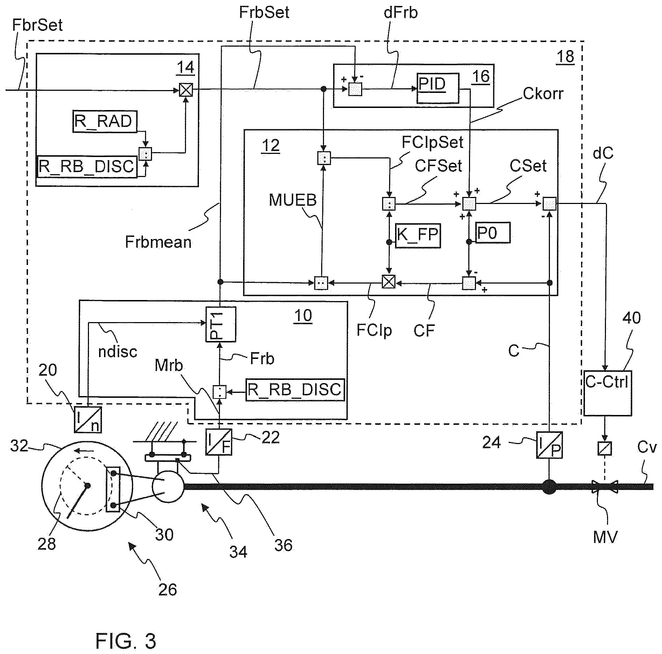

**Fig. 3** zeigt eine erfindungsgemäße Vorrichtung 18, welche zur Durchführung des oben beschriebenen Verfahrens ausgebildet ist.

Eine derartige Vorrichtung 18 wird beispielsweise durch ein Steuergerät realisiert, in dem die zuvor beschriebenen Berechnungsvorschriften und Ermittlungsschritte beispielsweise in Form von Code gespeichert sind.

Die innere Struktur der Vorrichtung 18 entspricht daher der Struktur des Verfahrens gemäß Fig. 2.

In der gezeigten Darstellung weist die Vorrichtung 18 fünf Schnittstellen auf. An der linken Seite empfängt die Vorrichtung einen Sollwert FbrSet der Bremskraft der entsprechenden Bremse 26. Sollte die Vorrichtung 18 mit mehreren Bremsen 26 in Kontakt stehen, so können über diese Schnittstellen beispielsweise auch die Sollwerte FbrSet der Bremskräfte mehrerer Bremsen 26 empfangen werden. Der Empfang dieser Sollwerte erfolgt beispielsweise über ein BUS-System des Fahrzeugs oder ein weiteres Steuergerät, welches die entsprechenden Sollwerte FbrSet zur Verfügung stellt.

An der in der Zeichnung unteren Seite der Vorrichtung 18 sind drei Schnittstellen vorgesehen, um die Werte, welche die Sensoren 20, 22 und 24 ausgeben, zu empfangen. Diese Schnittstellen sind zu diesem Zweck als Kabelverbindungen ausgebildet, welche mit den Sensoren 20, 22 und 24 in Verbindung stehen. Alternativ sind sie als BUS-Verbindung ausgeführt.

An der rechten Seite der Vorrichtung 18 ist eine Schnittstelle vorgesehen, welche eine Regeldifferenz dC an einen oder mehrere Bremsdruckregler 40 zur Verfügung stellt. Diese Schnittstelle ist als Kabelverbindung oder BUS-Verbindung ausgeführt.

In einer weiteren nicht gezeigten Ausführungsform der Erfindung ist der Bremsdruckregler 40 Teil der Vorrichtung 18. Die Vorrichtung 18 liefert somit ein Steuersignal an das Magnetventil MV zur Regulierung des Bremsdrucks C.

Der Gegenstand der Erfindung geht zwar über die zuvor beschriebenen Ausführungsformen hinaus. Aber die Erfindung ist ausschließlich durch den folgenden Satz von Ansprüchen definiert.

### BEZUGSZEICHENLISTE

- 10: Ermittlung mittlere Verzögerungsgröße
- 12: Ermittlung benötigte Anpressgröße
- 14: Ermittlung benötigte Verzögerungsgröße
- 16: Ermittlung zusätzliche Anpressgröße
- 18: Vorrichtung
- 20: Sensor (Drehzahlerfassungsvorrichtung)
- 21: variables Filter
- 22: Sensor (Verzögerungsgrößenerfassungsvorrichtung)
- 24: Sensor (Anpressgrößenerfassungsvorrichtung)
- 26: Bremse
- 28: Bremsscheibe
- 30: Bremsbacken
- 32: Rad
- 34: Bremsbefestigung
- 36: Leitung
- 38: Bremsleitung
- 40: Bremsdruckregler
- C: Bremsdruck (Anpressgröße)
- Ckorr: Bremsdruck (Korrekturwert)
- CF: Bremsdruck (um Anlegedruck korrigiert)
- CFSet: Bremsdruck (Sollwert aus Vorsteuerung)
- CSet: Bremsdruck (Sollwert)
- Cv: Druck (aus Druckspeicher)
- dC: Regelabweichung Bremsdruck
- dFrb: Regelabweichung Reibkraft
- FbrSet: Bremskraft (Sollwert)
- FClp: Zuspannkraft (Anpressgröße)
- FClpSet: Zuspannkraft (Sollwert)
- Frb: Reibkraft (Bremsscheibe)
- Frbmean: mittlere Reibkraft (Bremsscheibe)
- FrbSet: Reibkraft (Bremsscheibe, Sollwert)
- K_FP: Parameter (Bremszangenkennlinie)
- Mrb: Reibmoment (Bremscheibe)
- MUEB: mittlerer Belagreibwert
- ndisc: Drehzahl (Bremsscheibe, Rad)
- P0: Parameter (Anlegedruck)
- R_RAD: Parameter (Radradius)
- R_RB_DISC: Parameter (Reibradius Bremsbelag Bremsscheibe)

## Patentansprüche

1. Verfahren zur Bestimmung einer benötigten Anpressgröße (CSet, FClpSet) mindestens einer Bremse (26), insbesondere Reibbremse, eines Fahrzeugs, wobei
mindestens zwei aktuelle Werte einer Verzögerungsgröße (Frb, Mrb) der mindestens einen Bremse (26) bestimmt werden, wobei
die mindestens zwei aktuellen Werte der Verzögerungsgröße (Frb, Mrb) mittels eines variablen Filters (21) zu einer mittleren Verzögerungsgröße (Frbmean) der Bremse (26) verarbeitet werden, wobei
aus der mittleren Verzögerungsgröße (Frbmean) und einer aktuellen Anpressgröße (C, FClp) eine Zustandsgröße (MUEB) der mindestens einen Bremse (26) bestimmt wird, wobei
aus einer benötigten Verzögerungsgröße (FrbSet) und der Zustandsgröße (MUEB) eine benötigte Anpressgröße (CSet, FClpSet) der mindestens einen Bremse (26) bestimmt wird, **gekennzeichnet dadurch, dass**
das variable Filter (21) abhängig von einer Drehzahl (ndisc) der Bremse (26) verändert wird.

2. Verfahren gemäß Anspruch 1, wobei
die mindestens zwei aktuellen Werte der Verzögerungsgröße (Frb, Mrb) zu verschiedenen Zeitpunkten bestimmt werden.

3. Verfahren gemäß einem der Ansprüche 1 oder 2, wobei
die mittlere Verzögerungsgröße (Frbmean) der mindestens einen Bremse (26) über ein ganzzahliges Vielfaches einer Umdrehung einer Bremsscheibe (28) der Bremse (26) bestimmt wird.

4. Verfahren gemäß einem der vorangegangenen Ansprüche, wobei
die Zustandsgröße (MUEB) als Quotient aus der mittleren Verzögerungsgröße (Frbmean) und der aktuellen Anpressgröße (C, FCIp) berechnet wird, wobei
der Quotient derart gestaltet ist:
mittlere Verzögerungsgröße (Frbmean) / aktuelle Anpressgröße (C, FClp), oder
aktuelle Anpressgröße (C, FCIp) / mittlere Verzögerungsgröße (Frbmean).

5. Verfahren gemäß einem der vorangegangenen Ansprüche, wobei die aktuelle Anpressgröße (C, FCIp)
- mittels eines Sensors (24) bestimmt wird, und/oder
- aus mehreren Werten des Sensors (24) gemittelt wird, und/oder
- aus der Verarbeitung mindestens eines Wertes des Sensors (24) mit Parametern (P0, K_FP), welche die geometrischen und physikalischen Randbedingungen der mindestens einen Bremse (26) abbilden, bestimmt wird.

6. Verfahren gemäß einem der vorangegangenen Ansprüche, wobei
aus mindestens einer gewünschten Verzögerungsgröße (FbrSet) mindestens eine benötigte Verzögerungsgröße (FrbSet) der mindestens einen Bremse (26) des Fahrzeugs bestimmt wird.

7. Verfahren gemäß einem der vorangegangenen Ansprüche, wobei aus
der mittleren Verzögerungsgröße (Frbmean) der mindestens einen Bremse (26), und
der benötigten Verzögerungsgröße (FrbSet) der mindestens einen Bremse (26)
eine zusätzliche Anpressgröße (Ckorr) bestimmt wird, um die die benötigte Anpressgröße (CSet, FClpSet) korrigiert wird.

8. Verfahren gemäß einem der vorangegangenen Ansprüche, wobei
die benötigte Anpressgröße (CSet, FClpSet) der mindestens einen Bremse (26) mit der aktuellen Anpressgröße (C, FClp) zu einer Regelabweichung (dC) der Anpressgröße verarbeitet wird.

9. Verfahren gemäß einem der vorangegangenen Ansprüche, wobei
das Fahrzeug ein Schienenfahrzeug ist.

10. Vorrichtung (18) zur Durchführung des Verfahrens gemäß Anspruch 1 bis 9, die zum Verbau in einem Fahrzeug ausgebildet ist, aufweisend
mindestens eine Verarbeitungseinheit (18) zur Durchführung der Verfahrensschritte, sowie
mindestens eine Schnittstelle, die dazu ausgebildet ist, mindestens eine Verzögerungsgröße (Frb, Mrb) der mindestens einen Bremse (26) zu erhalten, sowie
mindestens eine Schnittstelle, die dazu ausgebildet ist, eine aktuelle Anpressgröße (C, FClp) der mindestens einen Bremse (26) zu erhalten, sowie
mindestens eine Schnittstelle, die dazu ausgebildet ist, eine benötigte Anpressgröße (CSet, FClpSet) oder eine Regelabweichung (dC) der Anpressgröße (C, FClp) zur weiteren Verarbeitung an das Fahrzeug zur Verfügung zu stellen.

11. Vorrichtung (18) gemäß Anspruch 10, aufweisend
mindestens eine Schnittstelle, die dazu ausgebildet ist, eine Drehzahl (ndisc) der mindestens einen Bremse (26) zu erhalten.

12. Vorrichtung (18) gemäß Anspruch 10 oder 11, aufweisend
mindestens eine Schnittstelle, die dazu ausgebildet ist, eine benötigte Verzögerungsgröße (FbrSet) des Fahrzeugs zu erhalten.

13. System zur Durchführung des Verfahrens gemäß einem der Ansprüche 1 bis 9, aufweisend
mindestens einen Sensor (22), der dazu ausgebildet ist, mindestens eine Verzögerungsgröße (Frb, Mrb) der mindestens einen Bremse (26) zu bestimmen, sowie
eine Vorrichtung (18) gemäß einem der Ansprüche 10 bis 12, wobei
der mindestens eine Sensor (22) dazu ausgebildet ist, aktuelle Werte der Verzögerungsgröße (Frb, Mrb) über die Schnittstelle an die Vorrichtung (18) zu übertragen.

14. System gemäß Anspruch 13, aufweisend
mindestens einen Sensor (20) zur Ermittlung der Drehzahl (ndisc) der mindestens einen Bremse (26), wobei
der mindestens eine Sensor (20) dazu ausgebildet ist, aktuelle Werte der Drehzahl (ndisc) über die Schnittstelle an die Vorrichtung (18) zu übertragen.

15. Fahrzeug, insbesondere Schienenfahrzeug, zur Durchführung des Verfahrens gemäß einem der Ansprüche 1 bis 9, aufweisend
eine Vorrichtung (18) gemäß einem der Ansprüche 10 bis 12, oder
ein System gemäß einem der Ansprüche 13 oder 14.

16. Computerprogrammprodukt mit auf einem maschinenlesbaren Träger gespeichertem Programmcode zur Durchführung des Verfahrens gemäß einem der Ansprüche 1 bis 9.

## Claims

1. Method for determining a required contact pressure variable (CSet, FClpSet) of at least one brake (26), in particular a friction brake, of a vehicle, wherein
at least two current values of a deceleration variable (Frb, Mrb) of the at least one brake (26) are determined, wherein
the at least two current values of the deceleration variable (Frb, Mrb) are processed by means of a variable filter (21) to form a mean deceleration variable (Frbmean) of the brake (26), wherein
a state variable (MUEB) of the at least one brake (26) is determined from the mean deceleration variable (Frbmean) and a current contact pressure variable (C, FClp), wherein
a required contact pressure variable (CSet, FClpSet) of the at least one brake (26) is determined from a required deceleration variable (FrbSet) and the state variable (MUEB), **characterized in that**
the variable filter (21) is changed depending on the rotational speed (ndisc) of the brake (26).

2. Method according to Claim 1, wherein
the at least two current values of the deceleration variable (Frb, Mrb) are determined at different times.

3. Method according to either of Claims 1 and 2, wherein
the mean deceleration variable (Frbmean) of the at least one brake (26) is determined over an integral multiple of a revolution of a brake disc (28) of the brake (26).

4. Method according to any of the preceding claims, wherein
the state variable (MUEB) is calculated as a quotient of the mean deceleration variable (Frbmean) and the current contact pressure variable (C, FClp), wherein
the quotient is configured such that:
mean deceleration variable (Frbmean) / current contact pressure variable (C, FClp), or current contact pressure variable (C, FClp) / mean deceleration variable (Frbmean).

5. Method according to any of the preceding claims, wherein
the current contact pressure variable (C, FClp)
- is determined by means of a sensor (24), and/or
- is a mean of several values of the sensor (24), and/or
- is determined from the processing of at least one value of the sensor (24) with parameters (P0, K_FP) which reflect the geometric and physical peripheral conditions of the at least one brake (26).

6. Method according to any of the preceding claims, wherein
at least one required deceleration variable (FrbSet) of the at least one brake (26) of the vehicle is determined from at least one desired deceleration variable (FbrSet).

7. Method according to any of the preceding claims, wherein
an additional contact pressure variable (Ckorr) is determined from
the mean deceleration variable (Frbmean) of the at least one brake (26), and
the required deceleration variable (FrbSet) of the at least one brake (26),
in order to correct the required contact pressure variable (CSet, FClpSet).

8. Method according to any of the preceding claims, wherein
the required contact pressure variable (CSet, FClpSet) of the at least one brake (26), together with the current contact pressure variable (C, FClp), is processed into a control deviation (dC) of the contact pressure variable.

9. Method according to any of the preceding claims, wherein
the vehicle is a rail vehicle.

10. Device (18) for performance of the method according to Claims 1 to 9, which is configured for installation in a vehicle, comprising
at least one processing unit (18) for performance of the method steps, and
at least one interface which is configured to obtain at least one deceleration variable (Frb, Mrb) of the at least one brake (26), and
at least one interface which is configured to obtain a current contact pressure variable (C, FClp) of the at least one brake (26), and
at least one interface which is configured to provide a required contact pressure variable (CSet, FClpSet) or a control deviation (dC) of the contact pressure variable (C, FClp) for further processing on the vehicle.

11. Device (18) according to Claim 10, comprising
at least one interface which is configured to obtain a rotational speed (ndisc) of the at least one brake (26) .

12. Device (18) according to Claim 10 or 11, comprising
at least one interface which is configured to obtain a required deceleration variable (FbrSet) of the vehicle.

13. System for performance of the method according to any of Claims 1 to 9, comprising
at least one sensor (22) which is configured to determine at least one deceleration variable (Frb, Mrb) of the at least one brake (26), and
a device (18) according to any of Claims 10 to 12, wherein
the at least one sensor (22) is configured to transmit current values of the deceleration variable (Frb, Mrb) to the device (18) via the interface.

14. System according to Claim 13, comprising
at least one sensor (20) for determining the rotational speed (ndisc) of the at least one brake (26), wherein
the at least one sensor (20) is configured to transmit current values of the rotational speed (ndisc) to the device (18) via the interface.

15. Vehicle, in particular rail vehicle, for performance of the method according to any of Claims 1 to 9, comprising
a device (18) according to any of Claims 10 to 12, or
a system according to any of Claims 13 or 14.

16. Computer program product with program code stored on a machine-legible carrier for performance of the method according to any of Claims 1 to 9.

## Revendications

1. Procédé de détermination de la grandeur (CSet, FClpSet) de serrage nécessaire d'au moins un frein (26), notamment d'un frein à friction, d'un véhicule, dans lequel
on détermine au moins deux valeurs instantanées d'une grandeur (Frb, Mrb) de décélération du au moins un frein (26), dans lequel
on transforme les au moins deux valeurs instantanées de la grandeur (Frb, Mrb) de décélération, au moyen d'un filtre (21) variable, en une grandeur (Frbmean) de décélération moyenne du frein (26), dans lequel
à partir de la grandeur (Frbmean) de décélération moyenne et d'une grandeur (C, FClp) de serrage instantanée, on détermine une grandeur (MUEB) d'état du au moins un frein (26), dans lequel
à partir d'une grandeur (FrbSet) de décélération nécessaire et de la grandeur (MUEB) d'état, on détermine une grandeur (CSet, SClpSet) de serrage nécessaire du au moins un frein (26), **caractérisé en ce que**
on modifie le filtre (21) variable en fonction d'une vitesse (ndisc) de rotation du frein (26).

2. Procédé suivant la revendication 1, dans lequel
on détermine les au moins deux valeurs instantanées de la grandeur (Frb, Mrb) de décélération à des instants différents.

3. Procédé suivant l'une des revendications 1 ou 2, dans lequel
on détermine la grandeur (Frbmean) de décélération moyenne du au moins un frein (26) par un multiple en nombre entier d'une rotation d'un disque (28) du frein (26).

4. Procédé suivant l'une des revendications précédentes, dans lequel
on calcule la grandeur (MUEB) d'état comme quotient de la grandeur (Frbmean) de décélération moyenne par la grandeur (C, FClp) de serrage instantanée, le quotient étant tel que :
grandeur (Frbmean) de décélération moyenne / grandeur (C, FClp) de serrage instantanée, ou grandeur (C, FClp) de serrage instantanée / grandeur (Frbmean) de décélération moyenne.

5. Procédé suivant l'une des revendications précédentes, dans lequel
la grandeur (C, FClp) de serrage instantanée
- est déterminée au moyen d'un capteur (24), et/ou
- est obtenue par la moyenne de plusieurs valeurs du capteur (24), et/ou
- est déterminée à partir de la transformation d'au moins une valeur du capteur (24) par des paramètres (P0, K_Fp), qui reproduisent les conditions aux limites géométriques et physiques du au moins un frein (26).

6. Procédé suivant l'une des revendications précédentes, dans lequel
on détermine, à partir d'au moins une grandeur (FbrSet) de décélération souhaitée, au moins une grandeur (FrbSet) de décélération nécessaire du au moins un frein (26) du véhicule.

7. Procédé suivant l'une des revendications précédentes, dans lequel on détermine
à partir de la grandeur (Frbmean) de décélération moyenne du au moins un frein (26) et
de la grandeur (FrbSet) de décélération nécessaire du au moins un frein (26)
une grandeur (Ckorr) de serrage supplémentaire, dont la grandeur (CSet, FClpSet) de serrage nécessaire est corrigée.

8. Procédé suivant l'une des revendications précédentes, dans lequel
on transforme la grandeur (CSet, FClpSet) de serrage nécessaire du au moins un frein (26) par la grandeur (C, FClp) de serrage instantanée en un écart (dC) de régulation de la grandeur de serrage.

9. Procédé suivant l'une des revendications précédentes, dans lequel
le véhicule est un véhicule ferroviaire.

10. Dispositif (18) pour effectuer le procédé suivant la revendication 1 à 9, qui est constitué pour être monté dans un véhicule, comportant
au moins une unité (18) de traitement pour effectuer les stades du procédé, ainsi qu'
au moins une interface, qui est constituée pour obtenir au moins une grandeur (Frb, Mrb) de décélération du au moins un frein (26), ainsi qu'
au moins une interface, qui est constituée pour obtenir une grandeur (C, FClp) de serrage instantanée du au moins un frein (26), ainsi qu'
au moins une interface, qui est constituée pour disposer d'une grandeur (CSet, FClpSet) de serrage nécessaire ou d'un écart (dC) de la régulation de la grandeur (C, FClp) de serrage, en vue d'un traitement ultérieur sur le véhicule.

11. Dispositif (18) suivant la revendication 10, comportant
au moins une interface, qui est constituée pour obtenir une vitesse (ndisc) de rotation du au moins un frein (26).

12. Dispositif (18) suivant la revendication 10 ou 11, comportant
au moins une interface, qui est constituée pour obtenir une grandeur (FbrSet) de décélération nécessaire du véhicule.

13. Système pour effectuer le procédé suivant l'une des revendications 1 à 9, comportant
au moins un capteur (22), qui est constitué pour déterminer une grandeur (Frb, Mrb) de décélération du au moins un frein (26), ainsi qu'
un dispositif (18) suivant l'une des revendications 10 à 12, dans lequel
le au moins un capteur (22) est constitué pour transmettre des valeurs instantanées de la grandeur (Frb, Mrb) de décélération au dispositif (18) par l'intermédiaire de l'interface.

14. Système suivant la revendication 13, comportant
au moins un capteur (20) de détermination de la vitesse (ndisc) de rotation du au moins un frein (26), dans lequel
le au moins un capteur (20) est constitué pour transmettre des valeurs instantanées de la vitesse (ndisc) de rotation au dispositif (18) par l'intermédiaire de l'interface.

15. Véhicule, notamment véhicule ferroviaire, pour effectuer le procédé suivant l'une des revendications 1 à 9, comportant
un dispositif (18) suivant l'une des revendications 10 à 12, ou
un système suivant l'une des revendications 13 ou 14.

16. Produit de programme d'ordinateur ayant un code de programme mis en mémoire sur un support déchiffrable par machine pour effectuer le procédé suivant l'une des revendications 1 à 9.
